# EUROPEAN PATENT APPLICATION

(11) **EP 1 593 757 A1**
(43) Date of publication of application: **09.11.2005**
(21) Application number: 05252796.7
(22) Date of filing: 06.05.2005
(51) Int. Cl.: C23C 28/00, C23C 26/00, C23C 4/12, C23C 4/18, C04B 38/00

(54) **Integrated ceramic/metallic components and methods of making same**

(30) Priority: 06.05.2004 US 840471
(71) Applicant: UNITED TECHNOLOGIES CORPORATION, Hartford, CT 06101 (US)
(72) Inventor: Freling, Melvin, West Hartford, Ct 06117 (US); Schlichting, Kevin Walter, Storrs, CT 06268 (US); Dierberger, James A., Hebron, CT 06248 (US)
(74) Representative: Leckey, David Herbert

(57) **Abstract**

Integrated ceramic/metallic components (50) and methods of making same are described herein. Embodiments of these integrated ceramic/metallic components comprise a metallic non-foam region (52); and a ceramic foam region (58) comprising a gradient porosity therein, wherein the ceramic foam region (58) and the metallic non-foam region (52) are integrally formed together to create the integrated ceramic/metallic component (50). Embodiments of these integrated ceramic/metallic components comprise a metallic region (52); and a single piece ceramic foam construction (58) comprising a plurality of ceramic foam regions (60, 70, 80) therein, each ceramic foam region comprising a predetermined pore size and a predetermined volume percent porosity, wherein the single piece ceramic foam construction (58) is integrally joined to the metallic region (52) to form the integrated ceramic/metallic component (50). These components may be utilized in gas turbine engines.

## Description

### FIELD OF THE INVENTION

The present invention relates generally to integrated ceramic/metallic components. More specifically, the present invention relates to integrally casting a prefabricated single piece ceramic foam component, comprising two or more different ceramic foam regions therein, to a metallic non-foam component to produce high performance integrated ceramic/metallic components, and methods of making same.

### BACKGROUND OF THE INVENTION

Gas turbine engines have long been used to convert chemical potential energy, in the form of fuel, to thermal energy, and then to mechanical energy for use in propelling aircraft, generating electric power, pumping fluids, etc. The efficiency of gas turbine engines increases with increasing operating temperatures. Therefore, there is a large incentive to raise the combustion and exhaust gas temperatures of such engines. However, the metallic materials currently used in the hot-section components of such engines operate in an environment very near the upper limits of their thermal stability. In fact, in the hottest section of modem gas turbine engines, metallic materials are utilized in hot gas paths at temperatures above their melting points. These metallic materials survive such temperatures only because they are air cooled, or because they comprise ceramic coatings thereon that lower the thermal conductivity of the component, thereby allowing the components to be operated at higher temperatures while utilizing less cooling air. In addition to acting as thermal insulators, such ceramic coatings also provide environmental protection to the metallic components, protecting the components against the oxidative and corrosive effects of the hot gases passing therethrough or thereby.

While increased operating temperatures are desired, there is also a large incentive to decrease the weight of the turbine blade and other rotating components as much as possible, to increase the weight efficiency of the engine. Thus, there is a desire to have components that are lighter than current components. Ceramic coatings are generally not load bearing portions of the components on which they are used. Consequently, these coatings add weight without adding any appreciable strength to the components. Thus, there is a strong desire for ceramic coatings that add minimal additional weight to the components while providing maximum benefits and/or protection thereto. Additionally, there is a desire to have ceramic coatings, components, or portions of components that can be tailored to possess certain desirable properties.

Current ceramic coatings on gas turbine engine components are generally applied via thermal spraying, electron beam physical vapor deposition, sputtering, chemical vapor deposition, or the like. To improve the adherence of the ceramic material on the component, and to provide oxidation protection to the component, a metallic bond coat is generally applied to the component, and then the ceramic coating is applied over the metallic bond coat. This multiple coating process adds to the manufacturing costs, and also adds additional weight to the component. Therefore, it would be desirable to have systems and methods that allow integrated ceramic/metallic components to be achieved. It would also be desirable to have such systems and methods eliminate the need for separate bond coats when ceramic coatings are utilized in conjunction with metal components. It would also be desirable to have systems and methods that allow at least portions of traditionally metallic components to be formed of lighter-weight ceramic foam materials. Additionally, it would be desirable to utilize a prefabricated single piece ceramic foam construction having a plurality of different porosity regions therein, and integrally cast this single piece ceramic foam construction with the metallic component, thereby forming an integrated ceramic/metallic component.

### SUMMARY OF THE INVENTION

Accordingly, the above-identified shortcomings of existing components that comprise ceramic portions or ceramic coatings thereon, and methods of making same, are overcome by embodiments of the present invention, which relates to novel integrated ceramic/metallic components and methods of making same. These systems and methods utilize prefabricated single piece ceramic foam constructions having a plurality of different porosity regions therein, and integrally join the single piece ceramic foam construction to the metallic component, thereby forming an integrated ceramic/metallic component.

Embodiments of this invention comprise integrated ceramic/metallic components. Embodiments of these components comprise a metallic non-foam region; and a ceramic foam region comprising a gradient porosity therein, wherein the ceramic foam region and the metallic non-foam region are integrally formed together to create the integrated ceramic/metallic component. The gradient porosity in the ceramic foam region comprises varying volume percent porosity and/or varying pore size. The varying volume percent porosity may range from about 5 to about 90 volume percent porosity, and the varying pore size may range from about 10 to about 100 pores per linear inch. The ceramic foam region is preferably formed as a single piece ceramic foam construction prior to being integrally formed together with the metallic non-foam region.

Embodiments of these components comprise a metallic region; and a single piece ceramic foam construction comprising a plurality of ceramic foam regions therein, each ceramic foam region comprising a predetermined pore size and a predetermined volume percent porosity, wherein the single piece ceramic foam construction is integrally joined to the metallic region to form the integrated ceramic/metallic component. Each ceramic foam region may comprise a different predetermined pore size and/or a different predetermined volume percent porosity. The predetermined volume percent porosity may range from about 5 to about 90 volume percent porosity, and the predetermined pore size may range from about 10 to about 100 pores per linear inch.

The ceramic foam regions and the metallic non-foam regions may be integrally formed together to create an integrated ceramic/metallic component in any suitable manner, such as for example, via investment casting, powder metallurgy and/or vacuum induction melting, or the like.

The outermost surface of any ceramic foam regions may be treated in a predetermined manner so as to create predetermined properties in the outermost surface of the ceramic foam regions. The predetermined manner may comprise utilizing one or more predetermined materials during fabrication of the outermost surface of the ceramic foam regions, and/or impregnating the outermost surface of the ceramic foam regions with a predetermined material.

The ceramic foam regions may comprise any suitable material, such as for example, yttria stabilized zirconia, mullite, zirconia, silicon carbide, silicon nitride, alumina, and/or titania, or the like.

The metallic non-foam regions may comprise any suitable material, such as for example, a nickel-based superalloy, a cobalt-based superalloy, and/or a refractory metal alloy, or the like.

The ceramic foam regions may comprise a coating on the metallic non-foam region, or the ceramic foam regions may comprise at least a portion of the component itself. If the ceramic foam regions comprises a portion of the component itself, the metallic non-foam region may provide reinforcing support to the ceramic foam regions.

The metallic non-foam region and/or the ceramic foam regions may comprise cooling passages therein.

These integrated ceramic/metallic components may comprise a gas turbine engine component, such as for example, a blade outer air seal, a burner floatwall, a turbine vane, a turbine blade, a nozzle, a combustor panel, and/or an augmentor.

Embodiments of this invention also comprise methods for producing integrated ceramic/metallic components. In embodiments, this method comprises the steps of: providing a single piece ceramic foam construction comprising at least two ceramic foam regions therein; positioning the single piece ceramic foam construction in a predetermined orientation within a ceramic mold shell; introducing molten metal into the ceramic mold shell; and solidifying the molten metal to form an integrated ceramic/metallic component in the ceramic shell mold, wherein the molten metal at least partially penetrates at least a portion of the single piece ceramic foam construction adjacent thereto to form a casting joint therewith upon solidification, thereby forming an integrated ceramic/metallic component. This method may also comprise the step of: applying a skim coat to predetermined locations on the single piece ceramic foam construction prior to positioning the single piece ceramic foam construction in the predetermined orientation within the ceramic mold shell. Solidifying the molten metal may comprise equiaxed solidification, directional solidification, and/or single crystal solidification.

Further features, aspects and advantages of the present invention will be readily apparent to those skilled in the art during the course of the following description, wherein references are made to the accompanying figures which illustrate some preferred forms of the present invention, and wherein like characters of reference designate like parts throughout the drawings.

### DESCRIPTION OF THE DRAWINGS

The systems and methods of the present invention are described herein below with reference to various figures, in which:
Figure 1 is a schematic diagram showing an exemplary integrated ceramic/metallic component comprising a metallic non-foam region and two ceramic foam regions, as utilized in embodiments of this invention;
Figure 2 is a schematic diagram showing an exemplary integrated ceramic/metallic component comprising a metallic non-foam region and three ceramic foam regions, as utilized in embodiments of this invention;
Figure 3 is a schematic diagram showing an exemplary integrated ceramic/metallic gas turbine airfoil, as utilized in embodiments of this invention, wherein the ceramic foam is utilized in place of a typical thermal barrier coating on the airfoil;
Figure 3A is an enlarged view of the area shown in circle 3A in Figure 3;
Figure 4 is a schematic diagram showing another exemplary integrated ceramic/metallic gas turbine airfoil, as utilized in embodiments of this invention, wherein the airfoil is made substantially all of ceramic foam that is strengthened by metallic stiffeners; and
Figure 5 is a schematic diagram showing an exemplary investment casting system, as utilized in embodiments of this invention.

### DETAILED DESCRIPTION OF THE INVENTION

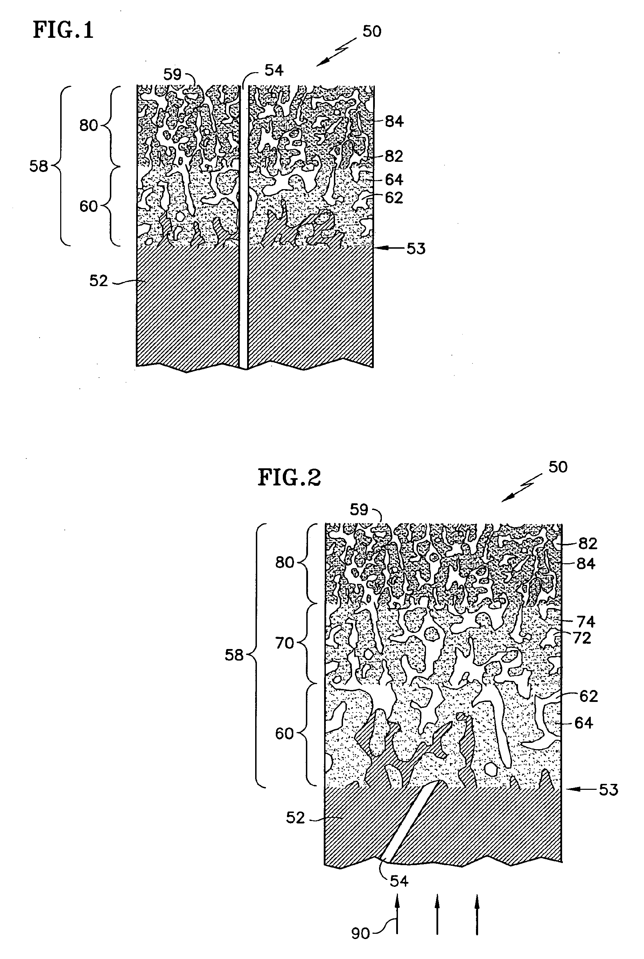

For the purposes of promoting an understanding of the invention, reference will now be made to some preferred embodiments of this invention as illustrated in FIGURES 1-5 and specific language used to describe the same. The terminology used herein is for the purpose of description, not limitation. Specific structural and functional details disclosed herein are not to be interpreted as limiting, but merely as a basis for the claims as a representative basis for teaching one skilled in the art to variously employ the present invention. Any modifications or variations in the depicted structures and methods, and such further applications of the principles of the invention as illustrated herein, as would normally occur to one skilled in the art, are considered to be within the scope of this invention.

This invention relates to systems and methods for creating high quality, high performance integrally cast ceramic/metallic components. These systems and methods utilize two or more ceramic foam regions that are prefabricated as a single piece ceramic foam construction, which is then integrally cast to a metallic component to produce an integrated ceramic/metallic component. As such, these components may weigh significantly less than comparable existing components. Furthermore, these single piece ceramic foam constructions may be utilized in place of typical thermal barrier coatings and/or abradable coatings on gas turbine engine components and/or they may be utilized to form lighter-weight portions of the gas turbine engine components themselves.

Embodiments of this invention comprise integrated ceramic/metallic components 50, as shown in Figures 1 and 2. These components 50 typically comprise a metallic non-foam region 52 and a ceramic foam portion 58 that comprises at least two ceramic foam regions (innermost ceramic foam region 60 and outermost ceramic foam region 80). In embodiments, an innermost ceramic foam region 60 is located proximate the metallic non-foam region 52, and an outermost ceramic foam region 80 is located proximate the first ceramic foam region 60, as shown in the exemplary, non-limiting integrated ceramic/metallic component 50 shown in Figure 1. In embodiments, there may also be one or more intermediate ceramic foam regions 70 disposed between the innermost ceramic foam region 60 and the outermost ceramic foam region 80, as shown in the exemplary, non-limiting integrated ceramic/metallic component 10 shown in Figure 2.

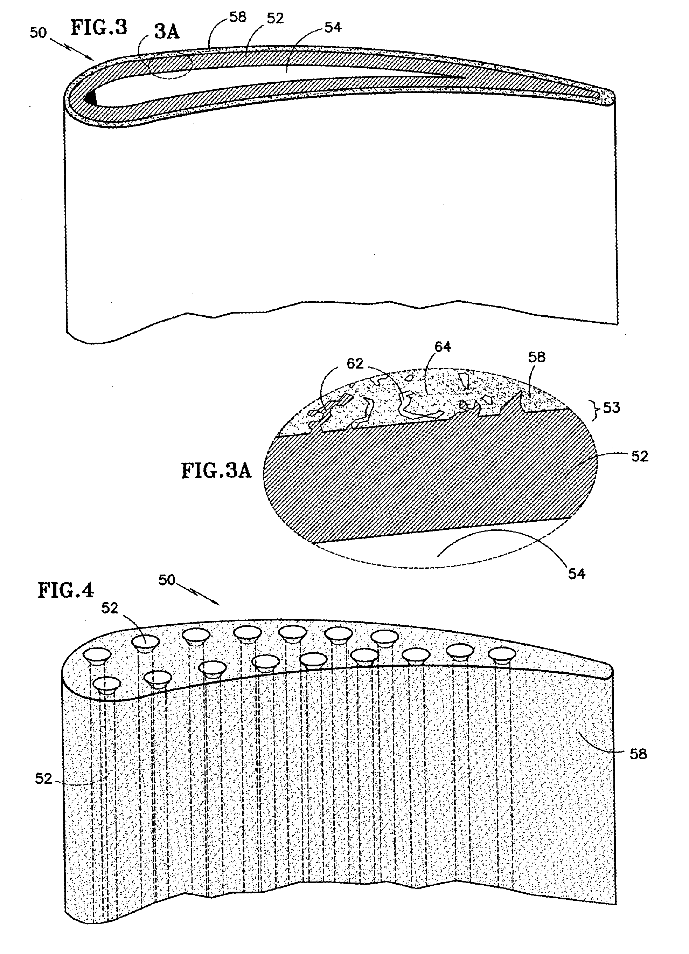

As shown in Figures 1 and 2, the ceramic foam portions 58 of these components comprise a gradient porosity. In embodiments, this gradient porosity comprises larger pores near the ceramic/metallic interface 53 and smaller pores near the outermost surface 59 of the ceramic foam portion 58. This gradient porosity may also comprise varying volume percent porosities in addition to, or as an alternative to, varying pore sizes. While the embodiments described herein and shown in Figures 1 and 2 show the different ceramic foam regions as comprising layers, many other suitable arrangements are also possible within the scope of this invention. For example, the different ceramic foam regions may be disposed in a side-by-side arrangement, or in any other suitable arrangement, instead of being layered one on top of another. For example, two different ceramic foam regions may exist side-by-side on a metallic component, and then a third ceramic foam region may be layered over both the first two side-by-side ceramic foam regions to form a uniform outer ceramic foam region. In other embodiments, the ceramic foam regions may comprise portions of the integrated ceramic/metallic component 50 itself, instead of or in addition to comprising layers or coatings thereon. For example, a turbine blade airfoil may comprise a ceramic foam portion 58 that has been integrally cast as a coating on a metallic non-foam region 52, as shown in Figure 3, or a substantial portion of a turbine blade airfoil itself may comprise a ceramic foam portion 58, as shown in Figure 4. Many other arrangements are also possible.

An exemplary integrated ceramic/metallic component 50, a gas turbine airfoil, is shown in Figure 3. In this embodiment, the ceramic foam portion 58 of this invention is used in place of a typical thermal barrier coating on the metallic non-foam region 52, which comprises a hollow cooling passage 54 therein. As can be seen more clearly in the enlarged view in Figure 3A, as well as in Figures 1 and 2, the metal of the metallic non-foam region 52 flows into at least some of the porosity 62 of the adjacent innermost ceramic foam region during forming, thereby creating a strong interface (i.e., a strong casting joint) therewith.

Another exemplary integrated ceramic/metallic component 50, a gas turbine airfoil, is shown in Figure 4. In this embodiment, the gas turbine airfoil is comprised substantially all of ceramic foam portion 58, and the metallic non-foam regions 52 merely provide structural support to the ceramic foam portion 58, which comprises a plurality of ceramic foam regions therein. In embodiments, this ceramic foam portion 58 may comprise an innermost ceramic foam region 60 comprising large pores and an outermost ceramic foam region 80 comprising smaller pores. In this manner, the inner and outer surfaces of the ceramic foam portion 58 can be custom designed to possess certain desired properties or characteristics. For example, the smaller pores in the outermost ceramic foam region 80 may make the component 50 more abrasion resistant, while the larger pores in the innermost ceramic foam region 60 may allow for better bonding with the metallic non-foam region 52. When a component 50 is made substantially all of ceramic foam portion 58, there may not be a need to have a hollow cooling passage 54 therein for cooling purposes as the porosity of the ceramic foam portion 58 may allow for enough cooling. Various other combinations of ceramic foam portions 58 and metallic non-foam regions 52 are also possible.

Referring again to Figures 1 and 2, each ceramic foam region 60, 70, 80 of this invention comprises two interpenetrating phases: the ceramic matrix 64, 74, 84 and the intracellular volume or porosity 62, 72, 82 contained therein. In embodiments, the ceramic matrix 64, 74, 84 comprises a substantially continuous reticulated body of interlacing ligaments, veins, fibers, ribbons, or the like, randomly interconnected in three dimensions, thereby forming open cells or channels 62, 72, 82 therebetween. The continuous ceramic matrix 64, 74, 84 is a self-supporting structure, which maintains the physical integrity of the ceramic foam regions 60, 70, 80. In embodiments, the intracellular volume or porosity 62, 72, 82 may be continuous within itself too, being randomly interconnected together in three dimensions to form open channels within the ceramic matrix 64, 74, 84. In embodiments, the ceramic matrix 64, 74, 84 and the intracellular volume 62, 72, 82 may both be continuous within themselves, providing a continuous path from the external surfaces to any location within either phase.

A ceramic foam portion 58 comprising a plurality of ceramic foam regions 60, 70, 80 therein can be easily manufactured as a single piece construction. Any suitable material or method may be used to create a porous ceramic matrix 64, 74, 84. In one exemplary embodiment, an open-celled, porous, organic material, such as for example, urethane foam, may be immersed in a slurry of finely divided ceramic powder containing a binder therein, thereby coating the walls of the porous, organic material. Thereafter, excess slurry can be removed, and the coated porous, organic material can be fired to burn out the organic material, thereby forming sintered ceramic bonds between the finely divided ceramic particles in the slurry and creating a porous ceramic matrix that replicates the internal structure of the porous, organic material that was burned out therefrom. To create a single piece construction 58 having a plurality of different porosity regions therein, the porous, organic material that is immersed in the slurry needs to have a plurality of different porosity regions therein too, so that same structure can be imparted to the single piece construction 58 that results therefrom. For example, two different regions or layers of porous, organic material may be attached together in any suitable manner, and then be immersed in a slurry and fired, so as to form a single piece construction 58 comprising two different ceramic foam regions therein, with each region having a different porosity therein. Many other ways of forming the porous ceramic matrix are also possible.

These single piece ceramic foam constructions may be fabricated in their final form, or they may be machined or otherwise processed after they are fabricated to get them into their final form. For example, these single piece constructions may either be fabricated in their desired shape and size, or they may be machined after being fabricated to get them into their desired shape and size. Also for example, detail features such as cooling passages or cooling holes 54 may either be fabricated in the single piece constructions, or they may be drilled or otherwise formed into the single piece constructions after they are fabricated.

In embodiments of this invention, each ceramic foam region 60, 70,80 comprises a predetermined porosity therein, wherein the porosity in each ceramic foam region may be different so as to create a gradient porosity throughout the ceramic foam portion 58. As used herein and throughout, "porosity" refers to pore size and/or volume percent porosity. For example, in embodiments, an innermost ceramic foam region 60 may comprise larger pores than an outermost ceramic foam region 80, as shown in Figure 1. The larger pores in the innermost ceramic foam region 60 may allow for better bonding between the ceramic foam region and the metallic non-foam region 52, while the smaller pores in the outermost ceramic foam region 80 may reduce the thermal conductivity of the component, provide better abrasion resistance, or block external contaminants from attacking or reacting with the component. In other embodiments, an innermost ceramic foam region 60 may comprise the largest pores, any intermediate ceramic foam region(s) 70 may comprise medium-sized pores, and an outermost ceramic foam region 80 may comprise the smallest pores, as shown in Figure 2.

Having two or more different ceramic foam regio ns in a ceramic foam portion 58 forms a gradual transition layer between the metallic non-foam region 52 and the outermost ceramic foam region 80, thereby helping to change the material modulus of the component 50. Having a gradient porosity throughout the ceramic foam portion 58 also assists in changing the cooling flow throughout the thickness thereof. For example, if larger pores are present near the ceramic/metallic interface, and smaller pores are present near the outermost surface of the ceramic foam portion 58, then, as the ceramic foam portion 58 cracks and spalls due to thermal effects or impact damage, larger porosity will be exposed, allowing a greater amount of cooling air to flow therethrough, thereby providing additional cooling air to the region and reducing any thermal gradients that may be present. In other embodiments, an innermost ceramic foam region 60 may comprise a higher volume percent of porosity than an outermost ceramic foam region 80, or vice versa, depending upon the desired application.

In embodiments of this invention, the volume percent porosity may range from about 5-90 volume percent porosity, and the pore sizes may range from about 10-100 or more pores per linear inch. In one non-limiting embodiment, an innermost ceramic foam region 60 may comprise about 80-90 volume percent porosity and/or about 10-65 pores per linear inch, any intermediate ceramic foam regions 70 may comprise about 20-80 volume percent porosity and/or about 65-85 pores per linear inch, and an outermost ceramic foam region 80 may comprise about 5-20 volume percent porosity and/or about 85-100 or more pores per linear inch. In embodiments, the ceramic matrix portions 64, 74, 84 may comprise about 60 volume percent or more of the ceramic foam regions 60, 70, 80 so as to impart sufficient structural strength thereto. It may be difficult to see from the planar microstructures shown in Figures 1 and 2 that the intracellular volume 62, 74, 84 is continuous within itself, but such is the case in embodiments of this invention. Many other porosity arrangements are also possible.

The different porosities in each of at least two ceramic foam regions allow various design parameters to be met. For example, a first ceramic foam region 60 may comprise a first porosity therein that allows a strong casting joint to be obtained between the metallic non-foam region 52 and that first ceramic foam region 60. Then, an outer ceramic foam region 80 overlying the first ceramic foam region 60 may comprise a second porosity therein, which is different from the first porosity in the first ceramic region 60, so that better abrasion, abradability, or other desirable properties exist in that outer ceramic foam region 80. The porosities in the various ceramic foam regions can be individually customized for various applications.

In embodiments, the innermost ceramic foam region 60, and/or any other ceramic foam regions disposed immediately adjacent the metallic non-foam region 52, preferably comprise open-cell porosity or at least partially-open-cell porosity therein so that during casting, the molten metal can flow at least partially into the porosity in the adjacent ceramic foam regions and form a strong casting joint between those adjacent ceramic foam regions and the neighboring metallic non-foam region 52. In embodiments, the outermost ceramic foam regions 80 preferably also comprise open-cell porosity or at least partially-open-cell porosity therein so that the region exhibits abradability properties. However, this outermost ceramic foam region 80 may also be designed to exhibit abrasive properties, if desired. In embodiments, any intermediate ceramic foam regions 70 may also comprise open-cell porosity or at least partially-open-cell porosity therein, depending upon the desired application of the final integrated ceramic/metallic component 50.

In embodiments, at least some of the intracellular volume 62 in the innermost ceramic foam region 60 or other ceramic foam regions adjacent the metal non-foam region 52, may be filled with metal having the same composition as the metal non-foam region 52 since the molten metal may flow therein during casting, thereby forming a casting joint therewith. As these regions are integrally cast together in embodiments of this invention, there may be no need for a bond coat layer between the metal non-foam region 52 and the innermost ceramic foam region(s) 60, as would often be required otherwise.

Each ceramic foam region may be individually designed so as to possess certain desired properties. For example, the outermost ceramic foam region 80 may be designed to comprise either abrasive or abradable properties, depending upon the desired application of the component 50. This abrasiveness or abradableness may be due to the open-cell or partially-open-cell porosity of the outermost ceramic foam region 80, it may be due to the addition of a modifying ceramic material during fabrication of the ceramic foam region 80, or it may be due to post-casting treatment of the outermost ceramic foam region 80. For example, in embodiments, at least partially-open cell porosity may be utilized in the outermost ceramic foam region 80 if abradability is desired. In embodiments, after casting, the outer surface of the outermost ceramic foam region 80 could be impregnated with a predetermined material to control the amount of porosity therein, to increase or decrease the erosion resistance thereof, to control the density thereof, and/or to alter the surface thereof for performance reasons, etc. For example, an abrasive material could be impregnated in the outermost ceramic foam region 80 if abrasiveness is desired. In embodiments, the ceramic material and any modifying ceramic materials that are selected for the ceramic foam region may be selected due to their inherent properties (i.e., thermal conductivity, thermal expansion/contraction coefficients, heat capacity, thermal shock resistance, oxidation resistance, corrosion resistance, wear resistance, strength, etc.). Numerous ceramic materials may be utilized in this invention, depending upon the desired properties and application of the final integrated ceramic/metallic component 50. For example, the ceramic foam regions of this invention may comprise any suitable ceramic material, such as for example, 7YSZ (7 weight percent yttria stabilized zirconia), mullite, zirconia, silicon carbide, silicon nitride, alumina, titania, and/or combinations thereof.

The porous structure of the ceramic foam regions resists impact damage better than a monolithic ceramic structure does. This is because impact energy may be absorbed via local crushing and compaction of the porous structures of this invention, instead of the impact energy and associated cracking being propagated into the structure's interior as would occur with a monolithic ceramic structure. The ceramic foam regions of this invention also possess good load bearing strength and good corrosion-erosion resistance. These ceramic foam regions also have a low thermal conductivity, low heat capacity and excellent thermal shock resistance. The porous structure of these ceramic foam regions reduces the thermal conductivity of the ceramic material, as compared with its monolithic form, by providing an insulating gas barrier within the intracellular volume therein. The empty porosity of the intracellular volume also reduces the overall weight of the integrated ceramic/metallic component 50, thereby reducing the load placed on the supporting structure the component 50 is attached to. The empty porosity and associated lower weight enables thicker ceramic coatings to be achieved without adding additional weight to the component 50. The porosity also imparts compliance to the ceramic, permitting it to flex during operation, thereby reducing its tendency to spall away during operation. The ceramic foam regions of this invention may also provide additional oxidation protection to the metallic non-foam regions 52 therebelow. There are also many other advantages provided by the ceramic foam regions of this invention.

The integrated ceramic/metallic components 50 of this invention may allow cooling of the component to be achieved by allowing heat and/or coolant to diffuse through the porosity in the ceramic foam regions during operation. This type of transpirational cooling may be more effective than conventional cooling techniques in some applications. Additionally, a cooling medium such as air may flow through the porous ceramic portions of the components 50, residing therein for a longer time than if only open cooling apertures were present, thereby transferring more heat from the component 50 to the cooling medium passing therethrough than possible with conventional open cooling apertures. The cooling medium flowing out of the porous ceramic portions of the components 50 may also form a cooling film on the component 50. Therefore, fewer cooling holes and less cooling air may be required in some applications if the integrated ceramic/metallic components 50 of this invention are utilized.

In addition to the at least partially open porosity of the ceramic foam regions of this invention, conventional cooling holes 54 or other cooling passages may also be incorporated into these components 50, either during fabrication or thereafter. Such cooling holes 54 may be present in both the metallic non-foam region 52 and the ceramic foam regions 60, 80, as shown in Figure 1, or they may only be present in the metallic non-foam region 52, as shown in Figure 2. As shown in Figure 2, cooling air 90 may pass through the metallic non-foam region 52 and then slowly diffuse through the ceramic foam regions 60, 70, 80 instead of exiting therefrom quickly. In the manner of Figure 2, the cooling air 90 may expand out radially from the cooling hole 54 in the metallic non-foam region 52, creating a widening cone of cooling air extending out from the cooling hole 54 and through the ceramic foam regions 60, 70, 80. If multiple cooling holes 54 are placed closely enough together, these cones of cooling air may overlap one another, thereby allowing for complete surface cooling of the component. Various other cooling passages may also be present in the ceramic foam regions 60, 70, 80 and/or the metallic non-foam region 52 of this invention.

The metallic non-foam region 52 of this invention may comprise any metallic material suitable for the components' 50 purpose. Some exemplary non-limiting metallic materials comprise nickel-based superalloys, cobalt-based superalloys and refractory metal alloys. A typical nickel-based superalloy comprises, in weight percent, about 1-25% cobalt, about 1-25% chromium, about 0-8% aluminum, about 0 - 10% molybdenum, about 0-12% tungsten, about 0-12% tantalum, about 0-5% titanium, about 0-7% rhenium, about 0-6% ruthenium, about 0-4% niobium, about 0 - 0.2% carbon, about 0-0.15% boron, about 0-0.05% yttrium, about 0-1.6% hafnium, with the balance being nickel and incidental impurities. Many other specific alloys are known and used in the art and may be used in this invention.

Once prefabricated, the desired single piece ceramic foam construction 58 comprising two or more different ceramic foam regions therein may be positioned within a ceramic shell mold 24, and an integrated ceramic/metallic composite component 50 can then be cast therein. Prior to being placed in the ceramic shell mold, a skim coat comprised of any suitable material may be disposed on the outer surfaces of the outermost ceramic foam regions 80, so that the ceramic foam regions will not be etched away while the ceramic or refractory cores used to create intricate hollow passages in the final cast component 50 are being etched out therefrom. After casting, the skim coat can then be machined off or otherwise removed to create the desired final shape on the outer surface of the outermost ceramic foam regions 80.

Investment casting has been used for many years to create near-net shape components that require minimal further processing after casting. Investment casting allows complex parts with intricate internal passages therein to be created. Generally, in the investment casting process, an injection molded wax pattern of a part is first produced. In addition to the single piece ceramic foam construction 58 of this invention, this pattern may comprise ceramic or other refractory material cores within the wax that, when the wax is removed, will create intricate hollow passages within the final cast component. Such hollow castings are commonly used to produce complex parts such as gas turbine engine components. Once a wax pattern is formed, the pattern may then be encased in several layers of ceramic material (i.e., slurry and stucco) to form a ceramic shell mold 24 of the part. The wax may then be burned out and removed from the ceramic shell mold 24 via heating, and the ceramic shell mold 24 may be strengthened via sintering in an oven. The ceramic shell mold 24 is then ready to be used for casting an integrated ceramic/metallic component 50.

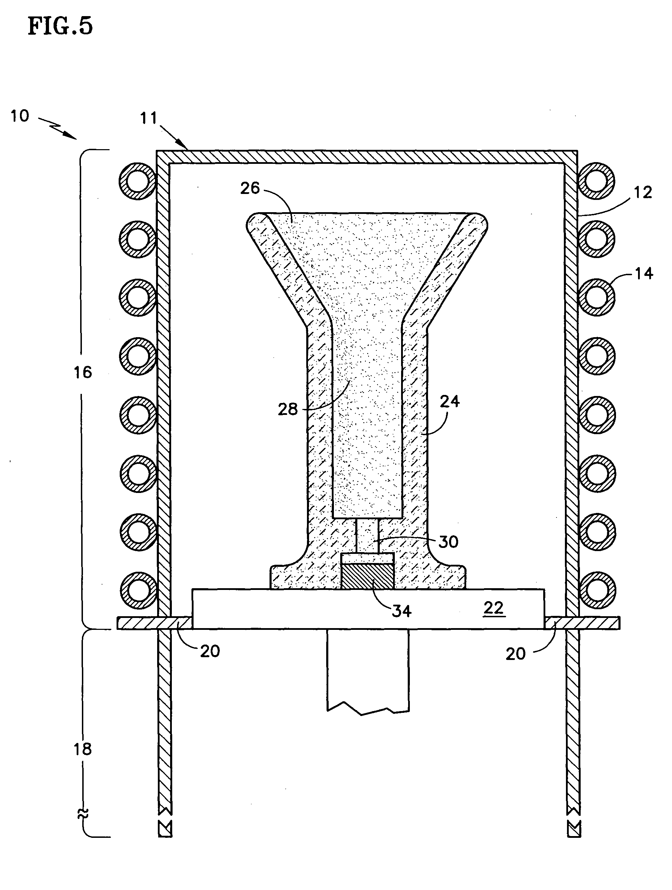

In embodiments, casting may comprise the exemplary investment casting system 10 shown in Figure 5. In this system 10, a vacuum furnace 11 comprises a susceptor 12 that is heated by induction coils 14 located proximately thereto. This furnace 11 also comprises an active heating chamber 16, a lower temperature chamber 18, a baffle 20 that serves as a radiation shield separating the two chambers, and a chill plate 22 that cools the base of the ceramic shell mold 24 that sits thereon. Prior to casting, and to help avoid nucleation other than at the bottom of the ceramic shell mold 24, the ceramic shell mold 24 may be heated in the active heating chamber 16 to a temperature above the melting point of the molten metal that will be poured into the ceramic shell mold 24 during casting.

During casting, a predetermined alloy or other metallic material may be melted and introduced into a refractory ceramic shell mold 24 via a pour cup 26. From the pour cup 26, the molten metal flows downwardly into the mold cavity 28, filling the cavities therein created by the evacuated or "lost" wax, and encapsulating any ceramic or refractory cores positioned with the mold 24. The molten metal may then be selectively cooled to produce an integrated ceramic/metallic component 50. Selective cooling may comprise initiating solidification of the molten metal via chill plate 22. Subsequent directional crystallization of the molten metal can be had by slowly lowering the chill plate 22 to gradually withdraw the ceramic shell mold 24 from the active heating chamber 16 and position it within the lower temperature chamber 18 to establish and control unidirectional heat removal from the molten metal contained with the mold 24. As this occurs, a solidification front is established in the molten metal, and this solidification front moves upwardly through the molten metal in the mold cavity 28 to form a directionally cast integrated ceramic/metallic component 50 therein. This produces an integrated ceramic/metallic component 50 having a controlled grain structure with a predetermined directional solidification pattern therein. After casting, the ceramic shell mold 24 may be removed (i.e., mechanically) from the outside of the cast component, and any ceramic or other refractory cores may be removed from the cast component via a chemical dissolution process. Thereafter, the skim coat may be machined off, and the integrated ceramic/metallic component 50 can be heat treated, if desired, to strengthen the component 50 and homogenize the metallurgical structure thereof.

The directional solidification casting technique described above is only one way to investment cast a component. It was described for illustrative purposes only, to better explain the present invention, and is not meant to limit this invention in any way. A variety of casting techniques, such as for example, equiaxed casting, directional solidification casting, single crystal casting, etc., could all be used to create the integrated ceramic/metallic composite components 50 of this invention, and all are deemed to be within the scope of this invention. Additionally, numerous other methods could be utilized to form the integrated ceramic/metallic components 50 of this invention, such as for example, powder metallurgy, vacuum induction melting, etc.

In embodiments, seed crystals 34 may be utilized to impart a desired crystallographic orientation to the integrated ceramic/metallic components 50 of this invention, if desired. Seed crystals 34 may be used to initiate crystal growth when the molten metal is poured into the mold cavity 28, and to control crystal orientation as the solidification front progresses throughout the molten metal. In this manner, the seed crystal 34 determines the resulting crystal orientation of the final integrally cast ceramic/metallic component 50.

In embodiments, grain selectors 30 may be utilized to improve production yields and promote the formation of optimum desired crystal structures in the integrated ceramic/metallic components 50 of this invention, if desired. Grain selectors 30 can ensure that a desired crystal orientation continues to grow in the molten metal, or they can convert columnar crystal growth into single crystal growth in the molten metal.

This integrated ceramic/metallic components 50 of this invention may comprise gas turbine engine components, such as for example, blade outer air seals, burner floatwalls, turbine blades, turbine vanes, nozzles, combustor panels, and augmentors, etc. The ceramic foam regions may comprise a coating on these components, or they may comprise a portion of the components themselves.

As described above, this invention provides integrated ceramic/metallic components and methods of making same. Advantageously, a plurality of different ceramic foam regions may be prefabricated as a single piece ceramic foam construction, which can then be integrally cast or otherwise joined to a metallic component to form an integrated ceramic/metallic component. Therefore, these components and methods may eliminate the need for separate bond coats. Additionally, these components may be significantly lighter than conventional components. Lighter components in a gas turbine engine lead to lighter overall engine weight, which is very desirable. Many other embodiments and advantages will be apparent to those skilled in the relevant art.

Various embodiments of this invention have been described in fulfillment of the various needs that the invention meets. It should be recognized that these embodiments are merely illustrative of the principles of various embodiments of the present invention. Numerous modifications and adaptations thereof will be apparent to those skilled in the art without departing from the scope of the present invention. For example, while this invention was described herein as being utilized in gas turbine engines, this invention may also be utilized in other applications where high temperatures are encountered, such as in furnaces and internal combustion engines. Thus, it is intended that the present invention cover all suitable modifications and variations as come within the scope of the appended claims and their equivalents.

## Claims

1. An integrated ceramic/metallic component (50) comprising:
a metallic non-foam region (52); and
a ceramic foam region (58) comprising a gradient porosity therein,
wherein the ceramic foam region (58) and the metallic non-foam region (52) are integrally formed together to create the integrated ceramic/metallic component (50).

2. The component of claim 1, wherein the ceramic foam region (58) comprising the gradient porosity therein is formed as a single piece ceramic foam construction prior to being integrally formed together with the metallic non-foam region (52).

3. The component of claim 1, wherein the ceramic foam region (58) and the metallic non-foam region (52) are integrally formed together to create the integrated ceramic/metallic component (50) in at least one of the following manners: investment casting, powder metallurgy and vacuum induction melting.

4. The component of any preceding claim, wherein the gradient porosity comprises at least one of: varying volume percent porosity and varying pore size.

5. The component of claim 4, wherein the varying volume percent porosity ranges from about 5 to about 90 volume percent porosity.

6. The component of claim 4, wherein the varying pore size ranges from about 10 to about 100 pores per linear inch.

7. An integrated ceramic/metallic component (50) comprising:
a metallic region (52); and
a single piece ceramic foam construction (58) comprising a plurality of ceramic foam regions (60, 70, 80) therein, each ceramic foam region comprising a predetermined pore size and a predetermined volume percent porosity,
wherein the single piece ceramic foam construction (58) is integrally joined to the metallic region (52) to form the integrated ceramic/metallic component (50).

8. The component of claim 7, wherein the single piece ceramic foam construction (58) is integrally joined to the metallic region (52) via at least one of: investment casting, powder metallurgy and vacuum induction melting.

9. The component of claim 7 or 8, wherein each ceramic foam region (60, 70, 80) comprises a different predetermined pore size.

10. The component of claim 7, 8 or 9 wherein each ceramic foam region (60, 70, 80) comprises a different predetermined volume percent porosity.

11. The component of claim 7, wherein the predetermined pore size comprises about 10 to about 100 pores per linear inch.

12. The component of claim 7, wherein the predetermined volume percent porosity comprises about 5 to about 90 volume percent porosity.

13. The component of any preceding claim, wherein an outermost surface (59) of the ceramic foam region or ceramic foam construction (58) is treated in a predetermined manner so as to create predetermined properties therein.

14. The component of claim 13, wherein the said outermost surface (59) is treated by at least one of: utilizing one or more predetermined materials during fabrication of the outermost surface (59), and impregnating the outermost surface (59) with a predetermined material.

15. The component of any preceding claim , wherein the ceramic foam region or ceramic foam construction (58) comprises at least one of: yttria stabilized zirconia, mullite, zirconia, silicon carbide, silicon nitride, alumina, and titania.

16. The component of any preceding claim, wherein the metallic or metallic non-foam region (52) comprises at least one of: a nickel-based superalloy, a cobalt-based superalloy, and a refractory metal alloy.

17. The component of any preceding claim, wherein the ceramic foam region or ceramic foam construction (58) comprises a coating on the metallic or metallic non-foam region (52).

18. The component of any claims 1 to 16, wherein the ceramic foam region or ceramic foam construction (58) comprises at least a portion of the component (50) itself.

19. The component of claim 18, wherein the metallic or metallic non -foam region (52) provides reinforcing support to the ceramic foam region or ceramic foam construction (58).

20. The component of any preceding claim, wherein at least one of the metallic or metallic non-foam region (52) and the ceramic foam region or ceramic foam construction (58) comprises cooling passages (54) therein.

21. The component of any preceding claim, wherein the component (50) comprises a gas turbine engine component.

22. The component of claim 21, wherein the gas turbine engine component (50) comprises at least one of: a blade outer air seal, a burner floatwall, a turbine vane, a turbine blade, a nozzle, a combustor panel, and an augmentor.

23. A method for producing integrated ceramic/metallic components (50), the method comprising the steps of:
providing a single piece ceramic foam construction (58) comprising at least two ceramic foam regions (60, 70, 80) therein;
positioning the single piece ceramic foam construction in a predetermined orientation within a ceramic mold shell (24);
introducing molten metal into the ceramic mold shell (24); and
solidifying the molten metal to form an integrated ceramic/metallic component (50) in the ceramic shell mold (24),
wherein the molten metal at least partially penetrates at least a portion of the single piece ceramic foam construction (58) adjacent thereto to form a casting joint therewith upon solidification, thereby forming an integrated ceramic/metallic component (50).

24. The method of claim 23, wherein solidifying the molten metal comprises utilizing at least one of: equiaxed solidification, directional solidification, and single crystal solidification.

25. The method of claim 23 or 24, further comprising:
applying a skim coat to predetermined locations on the single piece ceramic foam construction (58) prior to positioning the single piece ceramic foam construction in the predetermined orientation within the ceramic mold shell (24).
